# FASCICULE DE BREVET EUROPEEN

(11) **EP 3 078 554 B1**
(45) Date de publication et mention de la délivrance du brevet: **22.08.2018**
(21) Numéro de dépôt: 16162191.7
(22) Date de dépôt: 24.03.2016
(51) Int. Cl.: B60S 1/38

(54) **LAME D'ESSUYAGE POUR BALAI D'ESSUIE-GLACE**
SCHEIBENWISCHERBLATT FÜR SCHEIBENWISCHERARM
WIPER BLADE FOR WINDSCREEN WIPER

(30) Priorité: 10.04.2015 FR 1553165
(43) Date de publication de la demande: 12.10.2016
(73) Titulaire: Valeo Systèmes d'Essuyage, 78322 Le Mesnil Saint Denis (FR)
(72) Inventeur: BRETAGNOL, Frédéric, 63500 ISSOIRE (FR); NOEL, Amélie, 63800 COURNON D'AUVERGNE (FR)
(74) Mandataire: Vincent, Catherine Marie Marguerite

(56) Documents cités:
- DE-A1- 19 814 804
- DE-A1-102012 204 764
- FR-A1- 2 811 325
- FR-A1- 2 886 251
- JP-A- 2003 112 611
- US-A1- 2004 237 229

## Description

La présente invention a pour objet une lame d'essuyage pour un balai d'essuie-glace, ainsi qu'un procédé de fabrication d'une telle lame.

Les automobiles sont couramment équipées de systèmes d'essuie-glace pour assurer un lavage du pare-brise et éviter que la vision qu'a le conducteur de son environnement ne soit perturbée. Ces essuie-glaces sont classiquement entraînés par des bras effectuant un mouvement de va-et-vient angulaire et comportant des balais allongés, porteurs eux-mêmes de lames d'essuyage réalisées en une matière élastique. Ces lames frottent contre le pare-brise et évacuent l'eau en l'amenant en dehors du champ de vision du conducteur. Les balais sont réalisés sous la forme, soit, dans une version classique, de palonniers articulés qui tiennent la lame d'essuyage en plusieurs endroits discrets, soit, dans une version plus récente dénommée "flat blade" (pour "lame plate"), d'un ensemble semi-rigide qui maintient la lame d'essuyage sur toute sa longueur.

Une lame d'essuyage est en général réalisée en caoutchouc et présente donc une faible dureté. Pour augmenter sa durabilité, c'est-à-dire assurer un essuyage efficace sur un long terme, il est connu de recouvrir une lame d'essuyage d'un revêtement relativement dur.

Un autre inconvénient d'une lame d'essuyage en caoutchouc est qu'elle génère des nuisances sonores, notamment des grincements, lorsqu'elle est déplacée sur le pare-brise, en particulier lorsque celui-ci est peu humide. Pour résoudre cet inconvénient, il est connu de rajouter des charges lubrifiantes dans le revêtement pour diminuer le coefficient de friction de la lame sur le pare-brise et réduire ainsi les nuisances sonores. Le document DE 198 14 804 A1 divulgue une telle lame.

Les lames d'essuyage revêtues de la technique actuelle présentent toutefois des inconvénients. La Demanderesse a en effet constaté qu'un revêtement trop dur a tendance à se séparer de la lame par délamination. On a déjà proposé des solutions à ces problèmes, qui ne sont toutefois pas entièrement satisfaisantes.

Enfin, un autre problème des lames d'essuyage est que les revêtements utilisés sont à base de solvants qui sont relativement nocifs et peu écologiques.

Il existe donc un besoin pour un revêtement de lames d'essuyage permettant d'améliorer la durabilité de la lame, de réduire les nuisances sonores en cours d'utilisation, tout en limitant le risque de délamination de ce revêtement.

L'invention apporte une solution simple et efficace à ce besoin.

L'invention propose à cet effet une lame d'essuyage pour balai d'essuie-glace, comprenant un substrat en matériau à base d'élastomère(s) recouvert au moins en partie d'un revêtement à au moins trois couches superposées, dites respectivement interne, intermédiaire et externe, la couche interne formant un primaire d'accrochage à la couche intermédiaire et comprenant un taux de charges lubrifiantes sensiblement nul, de préférence nul, et la couche intermédiaire ayant un taux de charges lubrifiantes étant comprise entre 40 et 75% en poids sec (par rapport au poids sec de cette couche) et inférieur à celui de la couche externe.

Par « couche interne », on entend un couche de préférence directement au contact du substrat et/ou de la couche intermédiaire, de préférence directement au contact du substrat et de la couche intermédiaire.

Le taux de charges lubrifiantes de chaque couche est déterminé sur la base du poids total de la matière sèche dans la couche.

Autrement dit, le taux croissant de charges lubrifiantes d'une couche à l'autre, depuis l'intérieur jusqu'à l'extérieur du revêtement, permet d'augmenter progressivement la dureté de chacune d'elles. La tenue entre les couches en est améliorée car la différence de dureté entre deux couches adjacentes est moins importante. On obtient ainsi des couches ayant une bonne adhérence entre elles et le risque de délamination du revêtement est limité. De plus, la présence des charges lubrifiantes dans le revêtement permet de diminuer les frictions lors du frottement de la lame sur le pare-brise et ainsi de réduire les nuisances sonores en cours d'utilisation.

Selon différents modes de réalisation de l'invention, qui pourront être pris ensemble ou séparément :
- lesdites charges lubrifiantes sont choisies parmi des particules (telles que des microparticules, des nanoparticules, des nanotubes) de graphite, de disulfure de molybdène (MoS₂), de talc, de polymères, de fullerène, de carbone, de silice colloïdale et leurs mélanges,
- lesdits polymères peuvent être choisis parmi le polyéthylène, le polyéthylène à poids moléculaire « ultra haut » (Ultra High Molecular Weight Polyethylene - UHMWPE), le polypropylène, les fluoropolymères, les polymères et copolymères à base d'acrylates, de diallyl phtalates, d'unité époxy, d'acétate de vinyle-éthylène, d'urée formol, de phénols, d'amide, de carbonate, d'éthylène téréphtalate, d'imide, d'amide-imide, de styrène, de sulfone, d'éther sulfone, d'uréthane, de chlorure de vinyle, de silicone, et leurs mélanges,

- la taille des microparticules (telles que des microparticules de graphite, de disulfure de molybdène (MoS₂) ou de talc) est comprise entre 1 et 30 µm,
- la taille des nanoparticules et des nanotubes est inférieure à 1 µm,
- de préférence, lesdites charges sont de la poudre de graphite,
- le taux de charges lubrifiantes dans la couche externe est compris entre 70 et 100% en poids sec (par rapport au poids sec de cette couche),
- l'épaisseur de la couche interne est comprise entre 0,05 µm et 4 µm,
- l'épaisseur de la couche intermédiaire est comprise entre 1 et 5 µm,
- l'épaisseur de la couche externe est supérieure à 2 µm,
- la couche interne, la couche intermédiaire, et éventuellement la couche externe, comprennent au moins un liant,
- le ou lesdits liants comprennent un polymère ou un mélange de polymères,
- le ou les polymères (liants) sont choisis parmi les résines, les dérivés acryliques, les dérivés de styrène acrylique, les acrylonitriles et leurs dérivés, les dérivés de vinyle styrène, les polyuréthanes de type ester ou éther et leurs dérivés et le polychlorure de vinyle (PVC),
- le ou lesdits liants sont identiques ou différents dans chacune desdites couches,
- le ratio en poids des charges lubrifiantes sur le liant de la couche intermédiaire est compris entre 1 et 2,5,
- le ratio en poids des charges lubrifiantes sur le liant de la couche externe est supérieur à 2,5,
- la couche interne comprend en outre des particules adhésives,
- lesdites particules adhésives sont des particules ayant une structure noyau-enveloppe (« core-shell » en anglais),
- lesdites particules adhésives sont des particules fonctionnalisées en surface avec des fonctions chimiques réactives. Ces fonctions chimiques réactives sont par exemple des fonctions époxy, acrylique, vinylique, amino, ou toutes autres fonctions chimiques susceptibles de réagir à la fois avec la matière de la lame et avec au moins un composant de la couche intermédiaire, tel que le liant,
- lesdites particules adhésives sont des particules de silice fonctionnalisées ou de nature polymérique,
- la couche interne comprend des particules adhésives en combinaison avec un liant,
- lesdites particules adhésives sont des microparticules de diamètre compris entre 1 et 50 µm et/ou des nanoparticules de diamètre inférieur à 1 µm,
- la couche interne comprend au moins un agent de renforcement de l'adhésion et/ou au moins un agent de renforcement mécanique,
- le ou lesdits agents de renforcement de l'adhésion et/ou mécanique sont choisis parmi le noir de carbone, de la silice ou de la craie ainsi que leurs dérivés et/ou mélanges,
- la couche interne comprend en outre au moins un agent de réticulation,
- le ou lesdits agents de réticulation sont du type mélamine, isocyanate, époxy ou organo-silane,
- la couche externe comprend au moins un liant,
- le ou lesdits agents adhésifs comprennent un polymère ou un mélange de polymères, choisis parmi les résines, les dérivés acryliques, les dérivés de styrène acrylique, les acrylonitriles et leurs dérivés, les dérivés de vinyle styrène, les polyuréthanes de type ester ou éther et leurs dérivés, et le polychlorure de vinyle (PVC),
- la couche interne a un allongement à la rupture supérieur à 20%,
- la couche interne a un module de Young à 1% d'allongement inférieur à 5 MPa,
- la couche intermédiaire a un module de Young à 1% d'allongement supérieur à 25 MPa.

L'invention concerne aussi un procédé de fabrication d'une lame d'essuyage pour balai d'essuie-glace, de préférence à partir d'une jumelle de lames d'essuyage, ledit procédé comportant une étape de revêtement, au moins en partie, de ladite lame ou jumelle, comportant les sous-étapes consistant à déposer une couche interne sur au moins une partie de la lame ou jumelle, déposer une couche intermédiaire sur au moins une partie de la couche interne et déposer une couche externe sur au moins une partie de la couche intermédiaire, la couche interne formant un primaire d'accrochage et comprenant un taux de charges lubrifiantes sensiblement nul, de préférence nul, la couche intermédiaire ayant un taux de charges lubrifiantes non nul et inférieur à celui de la couche externe.

Selon différents modes de réalisation de l'invention, qui pourront être pris ensemble ou séparément :
- au moins une des couches déposées est en phase aqueuse,
- une couche (intermédiaire ou externe) est appliquée sur une autre couche (inférieure ou intermédiaire) lorsque cette autre couche est durcie et/ou sèche au touché,
- une couche (intermédiaire ou externe) est appliquée sur une autre couche lorsque cette autre couche n'est pas durcie et/ou n'est pas encore sèche au touché, ces couches étant destinées à durcir/sécher conjointement,
- au moins une des couches est appliquée sur la lame ou la jumelle de lames d'essuyage, avant ou après vulcanisation de la lame ou de la jumelle de lames d'essuyage,
- au moins une des couches est appliquée sur une lame chaude ou jumelle de lames d'essuyage chaude,
- lesdites couches sont appliquées par pinceau, trempage, spray, bol électrostatique
- ledit procédé comprend une étape préliminaire de préparation de surface de la lame ou de la jumelle de lames d'essuyage,
- ladite étape de préparation est un traitement par plasma, une halogénation et/ou une implantation ionique,
- ledit procédé comprend au moins une étape de cuisson de la lame ou de la jumelle de lames d'essuyage,
- la température de ladite cuisson est comprise entre 100 et 250 °C et est de préférence de 140 °C environ,
- la durée de ladite cuisson est comprise entre 0,1 et 5 minutes et est de préférence de 30 secondes environ,
- ladite lame d'essuyage ou lesdites lames d'essuyage de la jumelle comprennent respectivement une lèvre reliée à une charnière, ladite couche intermédiaire étant appliquée seulement sur ladite lèvre,
- ladite couche intermédiaire est appliquée seulement sur ladite lèvre par pinceau ou par utilisation d'un masque couvrant le reste de la lame ou jumelle,
- les couches sont appliquées sur une jumelle de lames d'essuyage,
- ladite jumelle est découpée pour former deux lames d'essuyage,
- au moins une des couches interne, intermédiaire et externe est appliquée sur ladite surface de ladite jumelle avant découpe de ladite jumelle,
- ladite jumelle n'est pas pré-fendue avant le dépôt du revêtement.

L'invention concerne encore un balai d'essuie-glace comprenant une lame telle que décrite ci-dessus.

L'invention concerne enfin un système d'essuyage comprenant un tel balai d'essuie-glace.

L'invention sera mieux comprise, et d'autres buts, détails, caractéristiques et avantages de celle-ci apparaîtront plus clairement au cours de la description explicative détaillée qui va suivre, d'au moins un mode de réalisation de l'invention donné à titre d'exemple purement illustratif et non limitatif, en référence aux dessins schématiques annexés.

Sur ces dessins :
- la figure 1 est une vue schématique d'une lame d'essuyage selon un mode de réalisation de l'invention,
- la figure 2 est un agrandissement du détail I de la figure 1, et
- la figure 3 est une vue schématique d'une jumelle de lames d'essuyage.

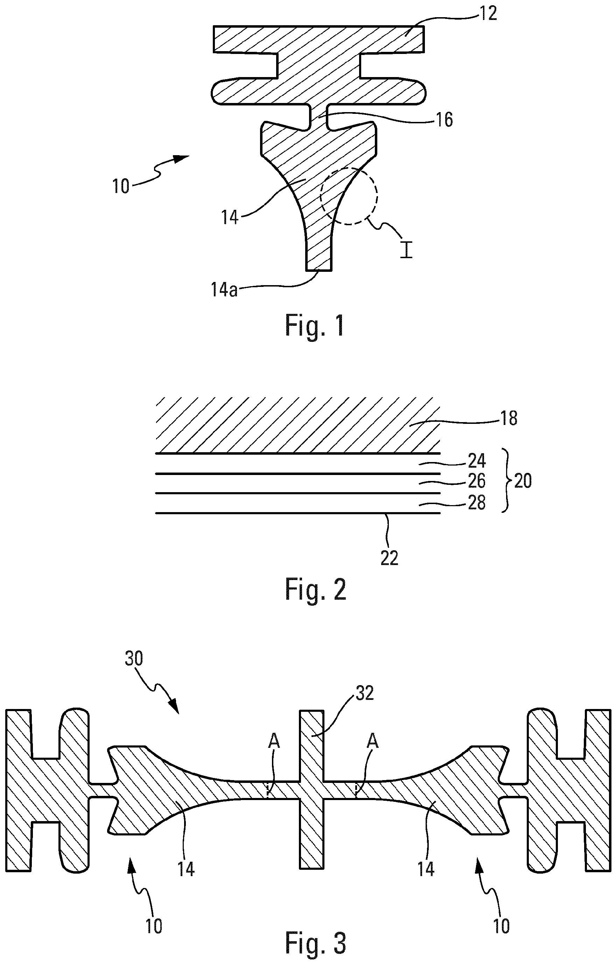

On se réfère d'abord à la figure 1 qui montre une lame d'essuyage 10 d'un balai d'essuie-glace, cette lame 10 ayant une forme allongée et destinée à être portée par un corps du balai (non représenté). La lame 10 comprend un talon 12 qui permet d'accrocher la lame 10 dans le corps du balai et qui est relié par une charnière 16 à une lèvre 14 qui est destinée à être au contact d'un pare-brise en vue de son essuyage. La charnière 16 est formée par une fine bande de matière qui confère à la lame une certaine flexibilité et autorise un retournement de celle-ci lors d'un changement de direction de déplacement du balai.

La lèvre 14, la charnière 16 et le talon 12 de la lame 10 sont formés d'une seule pièce, de préférence dans un matériau à base d'élastomère(s). La surface du matériau de la lame 10 peut être traitée par plasma, halogénation et/ou implantation ionique. Cette lame 10 forme donc un substrat pour le revêtement 20 selon l'invention.

La figure 2 représente un agrandissement de la lame d'essuyage 10 de la figure 1. La surface extérieure de la lame 10 est recouverte d'un revêtement multicouche selon l'invention, la référence 18 désignant le matériau à base d'élastomère(s) de la lame. La surface de contact de la lame 10 sur le pare-brise est ainsi définie par la surface extérieure 22 du revêtement 20.

Dans le mode de réalisation représenté, le revêtement 20 comprend trois couches superposées, respectivement interne 24, intermédiaire 26 et externe 28. La couche interne 24 forme un primaire d'accrochage et comprend un taux de charges lubrifiantes sensiblement nul. La couche intermédiaire 26 a un taux de charges lubrifiantes non nul et inférieur à celui de la couche externe 28.

La ou les charges lubrifiantes permettent d'abaisser le coefficient de friction de la lame d'essuyage 10. Elles peuvent être choisies parmi des particules (telles que des microparticules, des nanoparticules, des nanotubes) de graphite, de disulfure de molybdène (MoS₂), de talc, de polymères, de fullerène, de carbone, de silice colloïdale et leurs mélanges. Lesdits polymères formant les particules peuvent être choisis parmi le polyéthylène, le polyéthylène à poids moléculaire « ultra haut » (Ultra High Molecular Weight Polyethylene - UHMWPE), le polypropylène, les fluoropolymères, les polymères et copolymères à base d'acrylates, de diallyl phtalates, d'unité époxy, d'acétate de vinyle-éthylène, d'urée formol, de phénols, d'amide, de carbonate, d'éthylène téréphtalate, d'imide, d'amide-imide, de styrène, de sulfone, d'éther sulfone, d'uréthane, de chlorure de vinyle, de silicone, et leurs mélanges.

De préférence, la charge lubrifiante est de la poudre de graphite.

De préférence, le taux de charges lubrifiantes dans la couche intermédiaire 26 est compris entre 40 et 75% en poids sec par rapport au poids sec de la couche intermédiaire, et celui dans la couche externe 28 est compris entre 70 et 100% en poids sec par rapport au poids sec de la couche externe. La dureté d'une couche est notamment fonction de son taux de charges lubrifiantes, plus ce taux étant important, plus la dureté de la couche étant importante. La couche externe a ainsi une dureté supérieure à celle de la couche interne. L'écart de taux entre les couches interne et externe n'est toutefois pas important, ce qui fait que l'écart de dureté entre ces couches ne l'est pas non plus. Ceci permet d'assurer une bonne adhérence de la couche externe, ainsi que de la couche intermédiaire. Par ailleurs, du fait du taux charges sensiblement nul de la couche interne, celle-ci a une faible dureté et ainsi une bonne adhérence sur le matériau de la lame et assure ainsi une fonction de primaire d'accrochage limitant le risque de délamination du revêtement.

Chacune des couches appliquées (24, 26, 28) peut également comprendre un ou plusieurs liants. Le ou les liants comprennent un polymère ou un mélange de polymères dont la fonction est de lier les charges lubrifiantes entre elles, tel que le graphite. Il est incorporé sous forme de suspension, de dispersion ou de poudre en fonction du mode d'application du revêtement 20. Le polymère peut être un homopolymère ou un copolymère. Ces polymères peuvent être mis en oeuvre seuls ou en mélanges suivant leur compatibilité ou les propriétés finales recherchées.

Le polymère a de préférence une température de transition vitreuse inférieure ou égale à 0°C de préférence inférieure ou égale à -20°C afin de conserver les propriétés de souplesse du film du revêtement à basse température. Néanmoins, dans certains cas, un ou des polymères avec une température de transition vitreuse positive (pouvant être supérieure à 50°C) peuvent être ajoutées dans la formulation pour améliorer les propriétés de résistance à l'abrasion et d'autres propriétés telle que l'usure.

Le ou les polymères sont choisis parmi les résines, les dérivés acryliques, les dérivés de styrène acrylique, les acrylonitriles et leurs dérivés, les dérivés de vinyle styrène, les polyuréthanes de type ester ou éther et leurs dérivés et le polychlorure de vinyle (PVC). Le liant peut également comprendre un élastomère fluoré, des silicones, des siloxanes, des latex élastomériques, des poudres de polyamide, de polyéthylène ou de polypropylène. Le ou les liants peuvent être identiques ou différents dans chacune des couches (24, 26, 28).

De préférence, des liants à base aqueuse sont utilisés. On entend par phase aqueuse une composition qui comprend une teneur en solvants organiques inférieure ou égale à 10% en poids total de la composition, voire inférieure ou égale à 5 %, voire égale à 0%.

Le liant peut également comprendre au moins un agent de réticulation, de préférence du type mélamine, isocyanate, époxy ou organo-silane, pour conférer des propriétés de résistance mécanique et chimique accrues au revêtement d'une part, mais également assurer un lien chimique covalent entre deux couches successives. En effet, une réticulation peut être formée entre deux couches successives si celles-ci contiennent au moins un polymère réactif avec l'agent de réticulation. Par exemple, un agent de réticulation de type isocyanate peut réagir à la fois avec les fonctions alcools d'un polyuréthane et avec les fonctions acides d'une résine acrylique.

Le liant peut également comprendre tout autre élément chimique permettant d'assurer la cohésion des couches entres elles, notamment des agents de liaison de type époxy-silane par exemple.

Chacune des couches appliquées (24, 26, 28) peut également comprendre un ou plusieurs additifs, tels que des agents mouillants de dispersion, des agents épaississants, des anti-mousse, des conservateurs, des cires, etc. Les agents mouillants de dispersion comme par exemple des polyacrylates, facilitent l'incorporation des charges lubrifiantes dans le liant. Les agents épaississants, comme par exemple les celluloses modifiées, les polymères uréthanes modifiés ou les polyacrylates, permettent d'éviter leur sédimentation. Les cires, telles que des cires de polyéthylène par exemple, permettent d'améliorer l'imperméabilité du revêtement ainsi que de diminuer les frictions et d'améliorer la résistance à l'abrasion.

Avantageusement, la couche interne 24 comprend différents additifs, appelé aussi agents de renforcement de l'adhésion et/ou agents de renforcement mécanique, pour permettre une bonne adhésion du revêtement 20 sur la lame d'essuyage 10 et améliorer les propriétés mécaniques de la lame d'essuyage. Ces agents peuvent être du noir de carbone, de la silice, de la craie, ainsi que leurs dérivés et/ou mélanges.

Dans certains modes de réalisation selon l'invention, la couche interne peut être un primaire d'accrochage commercial, notamment un primaire à base aqueuse, tel que le Daotan® TW 6431 vendu par la société Cymel ou le resilon® 4020 vendu par la société Whitford.

Dans d'autres modes de réalisation selon l'invention, la couche interne 24 peut comprendre en outre des particules adhésives. Il peut s'agir de microparticules de diamètre compris entre 1 et 50 µm et/ou des nanoparticules de diamètre inférieur à 1 µm. Lesdites particules possèdent en surface des fonctions réactives permettant de renforcer le lien entre la couche interne 24 et la couche intermédiaire 26,. Il peut s'agir de fonctions époxy, acrylique, vinylique, amino, ou toutes autres fonctions chimiques susceptibles de réagir à la fois avec la matière de la lame 10 et avec au moins un composant de la couche intermédiaire, tel que le liant. Lesdites particules peuvent être notamment des particules de silice fonctionnalisées ou de nature polymérique. Leur fonctionnalisation peut se faire par tout procédé permettant la fonctionnalisation de particules polymères et/ou minérales, par exemple via un prétraitement plasma.

Dans ces modes de réalisation, la couche interne 24 peut ne comprendre que des particules adhésives déposées directement sur la lame 10.

Dans encore d'autres modes de réalisation selon l'invention, la couche interne 24 peut également être un vernis sur base réticulation aux UV. Celui-ci contiendra notamment des fonctions réactives de type alcool et/ou acide aptes à permettre une accroche covalente avec la couche intermédiaire 26, par exemple par activation thermique.

La couche interne 24 peut également comprendre un agent de réticulation, de préférence du type mélamine, isocyanate ou époxy, pour améliorer les propriétés mécaniques et chimiques de la lame 10.

Pour limiter la propagation dans l'air des charges lubrifiantes qui peuvent être volatiles, la couche externe 28 peut comprendre un liant. Celui-ci peut être identique au liant de la couche intermédiaire et externe. Les agents adhésifs utilisés comprennent généralement un polymère ou un mélange de polymères, choisis parmi les résines, les dérivés acryliques, les dérivés de styrène acrylique, les acrylonitriles et leurs dérivés, les dérivés de vinyle styrène, les polyuréthanes de type ester ou éther et leurs dérivés et le polychlorure de vinyle (PVC).

De façon générale, les couches interne 24 et intermédiaire 26 ne doivent pas dépasser une certainement épaisseur afin de garantir une bonne qualité d'essuyage. Ainsi, l'épaisseur de la couche interne 24 ne doit pas dépasser 4 µm par exemple, et est de préférence comprise entre 0,05 µm et 4 µm. L'épaisseur de la couche intermédiaire 26 ne dépasse pas 5 µm par exemple, et est de préférence comprise entre 1 et 5 µm. L'épaisseur de la couche externe est de préférence supérieure à 2 µm.

Dans les modes de réalisation dans lesquels la couche interne 24 comprend des particules adhésives, l'épaisseur de celle-ci dépendra de la taille des particules et également des propriétés d'adhésion souhaitées.

Pour éviter l'apparition de fissure ou la délamination du revêtement 20 lorsque la lame d'essuyage 10 est soumise au frottement sur le pare-brise, la composition et l'épaisseur des couches du revêtement 20 sont choisies de sorte que :
- la couche interne 24 ait un allongement à la rupture supérieur à 20% et un module de Young à 1% d'allongement inférieur à 5 MPa, et
- la couche intermédiaire 26 ait un module de Young à 1% d'allongement supérieur à 25 MPa.

Le revêtement 20 peut recouvrir tout ou partie de la lame d'essuyage 10. Notamment l'extrémité 14a de la lèvre (cf. figure 1) peut ne pas être recouverte de revêtement 20 pour permettre un bon essuyage du pare-brise. Compte tenu de la rigidité des différentes couches, le revêtement 20 peut être dépourvu de couche intermédiaire 26 au niveau de la charnière 16. En effet, pour pouvoir conserver une certaine souplesse et autoriser le retournement de la lèvre 14 sur la surface à essuyer, notamment lors du changement de direction du balai aux points de retournement, la charnière 16 comprend un revêtement à seulement deux couches : une couche interne comportant un taux de charges lubrifiantes sensiblement nul et une couche externe comportant des charges lubrifiantes. Malgré l'absence de couche intermédiaire dans le revêtement de la charnière, le risque de délamination de ce revêtement est faible du fait que ce revêtement n'est pas au contact de la surface à essuyer et n'est donc pas sollicité.

La lame d'essuyage 10 selon l'invention peut être obtenue par un procédé de fabrication comportant une étape de revêtement, au moins en partie, de ladite lame. Cette étape de revêtement peut comporter les sous-étapes consistant à :
- déposer une couche interne 24 sur au moins une partie de la lame 10,
- déposer une couche intermédiaire 26 sur au moins une partie de la couche interne 24, et
- déposer une couche externe 28 sur au moins une partie de la couche intermédiaire 26.

L'application des couches (24, 26, 28) peut se faire par pinceau, trempage, spray, bol électrostatique, transfert de Langmuir Blodgett ou toute autre technique connue de l'homme du métier.

Pour éviter les risques et inconvénients liés à l'utilisation de solvants organiques, notamment leur toxicité et leur dangerosité à être manipulés, en particulier dans le cas d'une application par pulvérisation, les couches (24, 26, 28) du revêtement peuvent être en phase aqueuse, i.e. comprenant une teneur en solvants organiques inférieure ou égale à 10% en poids total de la composition, voire inférieure ou égale à 5 %, voire égale à 0%.

De façon avantageuse, la composition de la couche interne 24 déposée sur la lame 10 comprend :
- entre 5 et 50% de liant,
- 0% de charges lubrifiantes
- entre 0 et 5% d'additifs,
- entre 0 et 10 % d'agent de réticulation
- eau q.s.p. 100%.

Dans les modes de réalisation dans lesquels la couche interne 24 comprend des particules adhésives, la composition de la couche interne 24 déposée sur la lame 10 comprend :
- entre 15 et 50% de particules adhésives,
- 0% de charges lubrifiantes
- entre 0 et 5% d'additifs,
- 0 % d'agent de réticulation
- eau q.s.p. 100%.

De façon avantageuse, la composition de la couche intermédiaire 26 déposée sur la couche interne 24 comprend :
- entre 0,1 et 50% de liant,
- entre 1 et 80% de charges lubrifiantes
- entre 0 et 5% d'additifs,
- entre 0 et 10 % d'agent de réticulation
- eau q.s.p. 100%.

De façon avantageuse, la composition de la couche externe 28 déposée sur la couche intermédiaire 26 comprend :
- entre 0 et 50% de liant,
- entre 1 et 80% de charges lubrifiantes
- entre 0 et 5% d'additifs,
- entre 0 et 10 % d'agent de réticulation
- eau q.s.p. 100%.

L'application des couches (24, 26, 28) peut se faire par pinceau, trempage, spray, bol électrostatique ou toute autre technique connue de l'homme du métier. Les particules adhésives sont de préférence appliquées par spray ou par pistolet électrostatique après dispersion en solution des particules

Pour favoriser l'évaporation de l'eau, les différentes couches (24, 26, 28) peuvent être appliquées sur une lame chaude.

Avantageusement, la couche intermédiaire 26 est appliquée lorsque la couche interne 24 est sèche au touché, de même la couche externe 28 est appliquée lorsque la couche intermédiaire 26 est sèche au touché.

Une étape de cuisson peut avoir lieu entre l'application de chacune des couches (24, 26, 28) ou après l'application des trois couches (24, 26, 28) du revêtement 20. Cette cuisson peut se faire par infra-rouge (dans un four ou avec une lampe), dans un four traditionnel ou par toute autre méthode connue de l'homme du métier.

En général, la température et la durée de ladite cuisson sont adaptées au type de chauffage. La température est généralement comprise entre 100 et 250 °C et peut durer entre 0,1 et 10 min. Dans le cas d'une cuisson par infra-rouge, la température est d'environ 140 °C et la cuisson dure de préférence environ 30 secondes. Dans le cas d'une cuisson au four traditionnel, notamment dans le cas de lames d'essuyage moulées, la température est d'environ 140 °C et la cuisson dure environ 5 à 10 min.

Dans certains modes de réalisation dans lesquels au moins une des couches (24, 26, 28) est appliquée avant la vulcanisation, l'étape de cuisson peut être l'étape de vulcanisation. Dans ce cas, la température est d'environ 200 °C pendant environ 1 à 3 min.

Dans les modes de réalisation dans lesquels la couche interne 24 est un vernis sur base réticulation aux UV, la réticulation est faite par irradiation UV avant l'application de la couche intermédiaire 26.

Le procédé peut comprendre une étape préliminaire de préparation de surface de la lame d'essuyage 10. Cette étape peut être, par exemple, un traitement par plasma, une halogénation, une implantation ionique.

La lame d'essuyage 10 peut être obtenue par extrusion ou par moulage. Elle peut également être obtenue à partir d'une jumelle 30 de lames d'essuyage, représentée à la figure 3.

Cette jumelle 30 peut, par exemple, être obtenue par une étape d'extrusion de matériau à base d'élastomère(s) 18 ou par moulage. La jumelle 32 comprend deux lames qui sont extrudées ensemble et sont attachées l'une à l'autre par les extrémités 14a des lèvres 14 de ces lames, par l'entremise d'un élément de liaison sacrificiel 32.

Chaque face de la jumelle 30 subit une étape de revêtement décrite précédemment pendant laquelle on vient appliquer successivement sur au moins une partie des lames d'essuyage 10, une couche interne 22, une couche intermédiaire 24 et une couche externe 28. Ce revêtement 20 est déposé notamment à l'endroit où la lèvre 10 va être pré-fendue (A).

L'étape de revêtement est ensuite suivie d'une étape de pré-fente, c'est-à-dire qu'à l'aide d'un outil coupant, une entaille de la jumelle est réalisée sur chaque face de la jumelle, au droit de la liaison entre la lèvre 14 de chaque lame d'essuyage 10 et l'élément de liaison sacrificiel 32 tout en laissant une partie de cette liaison non découpée. Ainsi, chaque lame 10 est rattachée à l'élément de liaison sacrificiel 32 par un " pont " de matière pouvant être coupé facilement mais suffisamment résistant pour permettre une manipulation de la jumelle 30 sans que les deux lames d'essuyage 10 ne se séparent.

Enfin, dans une étape de découpe, on sépare chaque lame 10 de l'élément de liaison sacrificiel 32 en coupant le pont de matière. On obtient ainsi deux lames 10 comportant un matériau à base d'élastomère(s) 18 dont la surface externe est revêtue au moins en partie par un revêtement 20 selon l'invention.

On notera que la surface de la lame d'essuyage 10 à base d'élastomère(s) 18 peut être partiellement ou totalement revêtue du revêtement 20, que les couches (24, 26, 28) soient appliquées sur une lame d'essuyage 10 ou sur une jumelle 30 de lames d'essuyage. Notamment, l'extrémité 14a de la lèvre peut ne pas être recouverte de revêtement 20 pour permettre un bon essuyage du pare-brise, en particulier si le revêtement 20 est appliqué sur une jumelle 30 de lames d'essuyage avant l'étape de pré-fente. De même, le revêtement au niveau de la charnière 16 peut être dépourvu de couche intermédiaire 26 pour conserver une certaine souplesse, comme décrit dans ce qui précède. Dans ce cas, la couche intermédiaire 26 est appliquée seulement sur la lèvre 14, par exemple, au moyen d'un pinceau ou encore d'un masque.

### EXEMPLES

Des exemples de revêtement 20 et de procédé sont donnés ici à titre illustratif, l'invention ne se limitant nullement à ceux-ci.

Dans une première étape, un primaire d'accrochage commercial (Daotan TW 6431) est appliquée par pulvérisation sur une jumelle 30 de lame d'essuyage vulcanisée pour former une couche interne 24 d'une épaisseur d'environ 2 µm. Un léger séchage est opéré afin d'avoir un aspect de surface sec au touché.

Dans un deuxième temps, une composition A conforme à l'invention est appliquée par pulvérisation sur la couche interne 24 pour former une couche intermédiaire 26 d'une épaisseur d'environ 4 µm. Un léger séchage est opéré afin d'avoir un aspect de surface sec au touché.

La composition A comprend, pour 100 g de produit :
- 22,3 g de liant (Neocryl XK 90)
- 10 g de charges lubrifiantes de graphite
- 1 g d'additifs (0,5 g de Natrosol® 250 HBR et 0,5 g de BYK 349), et
- 66,7 g d'eau.

Dans un troisième temps, une composition B conforme à l'invention est appliquée par pulvérisation sur la seconde couche pour former une couche externe d'une épaisseur d'environ 4 µm.

La composition B comprend, pour 100 g de produit :
- 4,1 g de liant (Neocryl XK 90),
- 10 g de charges lubrifiantes de graphite,
- 0,8 g d'additifs (0,3 g de Natrosol® 250 HBR et 0,5 g de BYK 349), et
- 85,1 g d'eau.

Dans un quatrième temps, l'ensemble de la pièce est séché par une lampe Infra Rouge à une température de 140°C, pendant 30 secondes.

La jumelle 30 est refendue de manière à obtenir deux lames d'essuyage 10. Celles-ci sont recouvertes d'un revêtement 20 dont :
- la couche intermédiaire 26 comprend en poids sec (par rapport au poids sec de la couche) :
   - 47,8% de liant (Neocryl XK 90),
   - 47,6% de charges lubrifiantes de graphite,
   - 4,6% d'additifs (2,4% de Natrosol® 250 HBR et 2,2% de BYK 349),
   - soit un ratio charges lubrifiantes sur liant de 1 ;
- la couche externe 28 comprend en poids sec (par rapport au poids sec de la couche) :
   - 14,6% de liant (Neocryl XK 90),
   - 79,3% de charges lubrifiantes de graphite,
   - 6,1% d'additifs (2,4% de Natrosol® 250 HBR et 3,7% de BYK 349),
   - soit un ratio charges lubrifiantes sur liant de 5,4.

Il est à noter que des variantes de réalisation sont bien sûr possibles et que la présente invention ne se limite pas à des lames d'essuie-glace ayant un revêtement dont les couches ont les compositions données en exemple. Notamment, il est possible d'étendre la présente invention à d'autres types de charges lubrifiantes, d'autres lubrifiants et/ou d'autres additifs connus de l'homme du métier pour obtenir des lames d'essuyage ayant les propriétés souhaitées.

## Revendications

1. Lame d'essuyage (10) pour balai d'essuie-glace, comprenant un substrat en matériau à base d'élastomère(s) recouvert au moins en partie d'un revêtement (20) à au moins trois couches superposées, dites respectivement interne (24), intermédiaire (26) et externe (28), la couche interne (24) formant un primaire d'accrochage à la couche intermédiaire et comprenant un taux de charges lubrifiantes sensiblement nul, de préférence nul, et la couche intermédiaire (26) ayant un taux de charges lubrifiantes non nul et inférieur à celui de la couche externe (28), la lame d'essuyage (10) étant **caractérisé en ce que** le taux de charges lubrifiantes dans la couche intermédiaire (26) est compris entre 40 et 75% en poids sec.

2. Lame d'essuyage (10) selon la revendication 1, dans laquelle le taux de charges lubrifiantes dans la couche externe (28) est compris entre 70 et 100% en poids sec.

3. Lame d'essuyage (10) selon l'une quelconque des revendications précédentes, dans laquelle l'épaisseur de la couche interne (24) est comprise entre 0,05 µm et 4 µm, et/ou l'épaisseur de la couche intermédiaire (26) est comprise entre 1 et 5 µm, et/ou l'épaisseur de la couche externe (28) est supérieure à 2 µm.

4. Lame d'essuyage (10) selon l'une quelconque des revendications précédentes, dans laquelle la couche interne (24), la couche intermédiaire (26), et éventuellement la couche externe (28), comprennent au moins un liant.

5. Lame d'essuyage (10) selon l'une quelconque des revendications précédentes, dans laquelle la couche interne (24) comprend au moins un agent de renforcement de l'adhésion et/ou au moins un agent de renforcement mécanique et/ou au moins un agent de réticulation.

6. Lame d'essuyage (10) selon l'une quelconque des revendications précédentes, dans laquelle la couche externe (28) comprend au moins un liant.

7. Lame d'essuyage (10) selon l'une quelconque des revendications précédentes, dans laquelle la couche interne (24) a un allongement à la rupture supérieur à 20%.

8. Lame d'essuyage (10) selon l'une quelconque des revendications précédentes, dans laquelle la couche interne (24) a un module de Young à 1% d'allongement inférieur à 5 MPa, et/ou la couche intermédiaire (26) a un module de Young à 1% d'allongement supérieur à 25 MPa.

9. Lame d'essuyage (10) selon l'une quelconque des revendications précédentes, comprenant une lèvre (14) reliée à une charnière (16), le revêtement (20) étant dépourvu de couche intermédiaire (26) au niveau de ladite charnière (16).

10. Procédé de fabrication d'une lame d'essuyage (10) pour balai d'essuie-glace telle que définie dans l'une quelconque des revendications précédentes, de préférence à partir d'une jumelle (30) de lames d'essuyage, ledit procédé comportant une étape de revêtement, au moins en partie, de ladite lame (10) ou jumelle (30), comportant les sous-étapes consistant à déposer ladite couche interne (24) sur au moins une partie de la lame (10) ou jumelle (30), déposer ladite couche intermédiaire (26) sur au moins une partie de la couche interne (24) et déposer ladite couche externe (28) sur au moins une partie de la couche intermédiaire (26), la couche interne (24) formant un primaire d'accrochage et comprenant un taux de charges lubrifiantes sensiblement nul, de préférence nul, la couche intermédiaire (26) ayant un taux de charges lubrifiantes non nul et inférieur à celui de la couche externe.

11. Procédé selon la revendication précédente, dans lequel au moins une des couches (24, 26, 28) déposées est en phase aqueuse.

12. Procédé selon la revendication 10 ou 11, comprenant une étape préliminaire de préparation de surface de la lame (10) ou jumelle (30) et/ou au moins une étape de cuisson de la lame ou jumelle (30).

13. Procédé selon l'une quelconque des revendications 10 à 12, dans lequel ladite lame d'essuyage (10) ou lesdites lames d'essuyage de la jumelle (30) comprennent respectivement une lèvre (14) reliée à une charnière (16), ladite couche intermédiaire (26) étant appliquée seulement sur ladite lèvre (14).

14. Procédé selon l'une quelconque des revendications 10 à 13, dans lequel les couches (24,26, 28) sont appliquées sur une jumelle (30) de lames d'essuyage, qui est ensuite découpée pour former deux lames d'essuyage (10).

## Patentansprüche

1. Wischergummi (10) für ein Scheibenwischerblatt, welcher ein Substrat aus einem Material auf der Basis von Elastomer(en) umfasst, das wenigstens teilweise von einem Überzug (20) aus wenigstens drei übereinanderliegenden Schichten, innere Schicht (24), Zwischenschicht (26) und äußere Schicht (28) genannt, bedeckt ist, wobei die innere Schicht (24) einen Haftprimer für die Zwischenschicht bildet und einen Anteil an schmierenden Füllstoffen umfasst, der im Wesentlichen null und vorzugsweise gleich null ist, und die Zwischenschicht (26) einen Anteil an schmierenden Füllstoffen aufweist, der von null verschieden und kleiner als derjenige der äußeren Schicht (28) ist, wobei der Wischergummi (10) **dadurch gekennzeichnet ist, dass** der Anteil an schmierenden Füllstoffen in der Zwischenschicht (26) zwischen 40 und 75 % Trockengewicht liegt.

2. Wischergummi (10) nach Anspruch 1, wobei der Anteil an schmierenden Füllstoffen in der äußeren Schicht (28) zwischen 70 und 100 % Trockengewicht liegt.

3. Wischergummi (10) nach einem der vorhergehenden Ansprüche, wobei die Dicke der inneren Schicht (24) zwischen 0,05 µm und 4 µm liegt und/oder die Dicke der Zwischenschicht (26) zwischen 1 und 5 µm liegt und/oder die Dicke der äußeren Schicht (28) größer als 2 µm ist.

4. Wischergummi (10) nach einem der vorhergehenden Ansprüche, wobei die innere Schicht (24), die Zwischenschicht (26) und eventuell die äußere Schicht (28) wenigstens ein Bindemittel umfassen.

5. Wischergummi (10) nach einem der vorhergehenden Ansprüche, wobei die innere Schicht (24) wenigstens ein Haftungsverstärkungsmittel und/oder wenigstens ein mechanisches Verstärkungsmittel und/oder wenigstens ein Vernetzungsmittel umfasst.

6. Wischergummi (10) nach einem der vorhergehenden Ansprüche, wobei die äußere Schicht (28) wenigstens ein Bindemittel umfasst.

7. Wischergummi (10) nach einem der vorhergehenden Ansprüche, wobei die innere Schicht (24) eine Bruchdehnung aufweist, die größer als 20 % ist.

8. Wischergummi (10) nach einem der vorhergehenden Ansprüche, wobei die innere Schicht (24) einen Elastizitätsmodul bei 1 % Dehnung aufweist, der kleiner als 5 MPa ist, und/oder die Zwischenschicht (26) einen Elastizitätsmodul bei 1 % Dehnung aufweist, der größer als 25 MPa ist.

9. Wischergummi (10) nach einem der vorhergehenden Ansprüche, welcher eine Lippe (14) umfasst, die mit einem Gelenk (16) verbunden ist, wobei der Überzug (20) an dem Gelenk (16) nicht mit einer Zwischenschicht (26) versehen ist.

10. Verfahren zur Herstellung eines Wischergummis (10) für ein Scheibenwischerblatt, wie in einem der vorhergehenden Ansprüche definiert, vorzugsweise aus einem Zwillingspaar (30) von Wischergummis, wobei das Verfahren einen Schritt der wenigstens teilweisen Beschichtung des Wischergummis (10) oder Zwillingspaares (30) umfasst, der die Teilschritte umfasst, die darin bestehen, die innere Schicht (24) auf wenigstens einen Teil des Wischergummis (10) oder Zwillingspaares (30) aufzubringen, die Zwischenschicht (26) auf wenigstens einen Teil der inneren Schicht (24) aufzubringen und die äußere Schicht (28) auf wenigstens einen Teil der Zwischenschicht (26) aufzubringen, wobei die innere Schicht (24) einen Haftprimer bildet und einen Anteil an schmierenden Füllstoffen umfasst, der im Wesentlichen null und vorzugsweise gleich null ist, wobei die Zwischenschicht (26) einen Anteil an schmierenden Füllstoffen aufweist, der von null verschieden und kleiner als derjenige der äußeren Schicht ist.

11. Verfahren nach dem vorhergehenden Anspruch, wobei wenigstens eine der aufgebrachten Schichten (24, 26, 28) sich in wässriger Phase befindet.

12. Verfahren nach Anspruch 10 oder 11, welches einen einleitenden Schritt der Oberflächenvorbereitung des Wischergummis (10) oder Zwillingspaares (30) und/oder wenigstens einen Schritt des Vulkanisierens des Wischergummis oder Zwillingspaares (30) umfasst.

13. Verfahren nach einem der Ansprüche 10 bis 12, wobei der Wischergummi (10) oder die Wischergummis des Zwillingspaares (30) jeweils eine Lippe (14) umfassen, die mit einem Gelenk (16) verbunden ist, wobei die Zwischenschicht (26) nur auf die Lippe (14) aufgebracht wird.

14. Verfahren nach einem der Ansprüche 10 bis 13, wobei die Schichten (24, 26, 28) auf ein Zwillingspaar (30) von Wischergummis aufgebracht werden, welches anschließend zerschnitten wird, um zwei Wischergummis (10) zu bilden.

## Claims

1. Wiper blade (10) for windscreen wiper, comprising a substrate made of material based on elastomer(s) covered at least partly by a coating (20) having at least three superposed layers, referred to respectively as the inner layer (24), intermediate layer (26) and outer layer (28), the inner layer (24) forming a bonding primer for bonding to the intermediate layer and comprising a lubricating filler content of substantially zero, preferably zero, and the intermediate layer (26) having a non-zero lubricating filler content that is lower than that of the outer layer (28), the wiper blade (10) being **characterized in that** the content of lubricating fillers in the intermediate layer (26) is between 40 and 75% by dry weight.

2. Wiper blade (10) according to Claim 1, in which the content of lubricating fillers in the outer layer (28) is between 70 and 100% by dry weight.

3. Wiper blade (10) according to any one of the preceding claims, in which the thickness of the inner layer (24) is between 0.05 µm and 4 µm, and/or thickness of the intermediate layer (26) is between 1 and 5 µm, and/or the thickness of the outer layer (28) is greater than 2 µm.

4. Wiper blade (10) according to any one of the preceding claims, in which the inner layer (24), the intermediate layer (26), and optionally the outer layer (28), comprise at least one binder.

5. Wiper blade (10) according to any one of the preceding claims, in which the inner layer (24) comprises at least one adhesion promoting agent and/or at least one mechanical reinforcing agent and/or at least one crosslinking agent.

6. Wiper blade (10) according to any one of the preceding claims, in which the outer layer (28) comprises at least one binder.

7. Wiper blade (10) according to any one of the preceding claims, in which the inner layer (24) has an elongation at break of greater than 20%.

8. Wiper blade (10) according to any one of the preceding claims, in which the inner layer (24) has a Young's modulus at 1% elongation of less than 5 MPa, and/or the intermediate layer (26) has a Young's modulus at 1% elongation of greater than 25 MPa.

9. Wiper blade (10) according to any one of the preceding claims, comprising a lip (14) connected to a hinge (16), the coating (20) being free of intermediate layer (26) at said hinge (16).

10. Process for manufacturing a wiper blade (10) for windscreen wiper, preferably from a pair (30) of wiper blades, said process comprising a step of coating, at least partly, said blade (10) or pair (30), comprising the substeps that consist in depositing an inner layer (24) on at least one portion of the blade (10) or pair (30), depositing an intermediate layer (26) on at least one portion of the inner layer (24) and depositing an outer layer (28) on at least one portion of the intermediate layer (26), the inner layer (24) forming a bonding primer and comprising a lubricating filler content of substantially zero, preferably zero, the intermediate layer (26) having a non-zero lubricating filler content that is lower than that of the outer layer.

11. Process according to the preceding claim, in which at least one of the layers (24, 26, 28) deposited is in the aqueous phase.

12. Process according to Claim 10 or 11, comprising a preliminary step of surface preparation of the blade (10) or pair (30) and/or at least one step of curing the blade or pair (30).

13. Process according to any one of Claims 10 to 12, in which said wiper blade (10) or said wiper blades of the pair (30) respectively comprise a lip (14) connected to a hinge (16), said intermediate layer (26) being applied only to said lip (14).

14. Process according to any one of Claims 10 to 13, in which the layers (24,26, 28) are applied to a pair (30) of wiper blades, which pair is then cut to form two wiper blades (10).
